# EUROPEAN PATENT APPLICATION

(11) **EP 2 980 608 A1**
(43) Date of publication of application: **03.02.2016**
(21) Application number: 15178362.8
(22) Date of filing: 24.07.2015
(51) Int. Cl.: G01V 1/34, G06F 17/30, G06T 19/00

(54) **SYSTEM AND METHOD OF FACILITATING OILFIELD DATA ANALYSIS**

(30) Priority: 28.07.2014 US 201414444569
(71) Applicant: Services Petroliers Schlumberger, 75007 Paris (FR); Logined B.V., 2586 BJ S Gravenhage (NL)
(72) Inventor: Anderson, Michele, League City, TX Texas 77573 (US); Saier, David, Oxford, Oxfordshire OX2 8HX (GB); Sun, Jingjing, Missouri City, TX Texas 77459 (US)
(74) Representative: Li, Boxi

(57) **Abstract**

The present disclosure describes a system, method and computer readable medium for facilitating oilfield data analysis. In one embodiment, oilfield data that may be utilized in connection with a plurality of data visualization types may be identified and used to generate oilfield data filter(s). One or more of the oilfield data filter(s) may be applied and used to filter out oilfield data from selection display screen(s) presented to the user. One or more graphical representations of the selected oilfield data may be generated and displayed to the user. In one embodiment, the user may refine the graphical representation(s) of selected oilfield data using a styling interface.

## Description

### BACKGROUND

Oilfield operations generate a great deal of electronic data. Such data may be used to access oilfield conditions and make decisions concerning future oilfield operations such as well planning, well targeting, well completions, production rates, and other operations and/or operating parameters. Often this information is used to determine when (and/or where) to drill new wells, re-complete existing wells, or alter oilfield production parameters.

Oilfield data may be collected using sensors positioned about the oilfield. For example, sensors on the surface may monitor seismic exploration activities, sensors in the drilling equipment may monitor drilling conditions, sensors in the wellbore may monitor fluid composition, sensors located along the flow path may monitor flow rates, and sensors at the processing facility may monitor fluids collected.

The analysis of oilfield data can be a daunting prospect due to the amount of oilfield data involved and the inadequacies of known data visualization applications. This may be especially true for large oilfield operations having multiple wells and/or reservoirs. Unfortunately, known data visualization applications may require the user to expend a considerable amount of energy trying to locate and select data of interest for analysis. For example, the user may be required to sift through screen after screen of oilfield data that may or may not be applicable to the type of data visualization he or she wishes to use.

As such, there remains a need for a system, method and computer readable medium capable of providing a user with an efficient oilfield data review and selection process.

### SUMMARY

Accordingly, the present disclosure describes an efficient and user friendly process through which a user may select oilfield data for analysis, review graphical representations of the selected data and then fine-tune the display to his or her preference using any number of styling options.

In one embodiment, the system described herein may identify oilfield data that may be utilized in connection with a plurality of data visualization types and then generate oilfield data filter(s) for each data visualization type. In the context of this example, data visualization types may include charts, maps, graphs and/or any other suitable audio/visual representations that may be utilized to display oilfield data for analysis. In one embodiment, data visualization types may include line plots (such as line charts and/or graphs), cross plots, grid plots (such as grid maps and/or contour maps), and/or bubble plots, (such as bubble maps and/or bubble charts).

In an example situation, a user may indicate that he or she wishes to view a graphical representation comprising a line plot of oilfield data. A graphic user interface may be provided through which the user may select the type of data visualization he or she would like to use. In this example, the system may retrieve one or more oilfield data filter(s) applicable to the line plot data visualization type, apply the filter to the available oilfield data and then display the filtered results to the user. In one embodiment, the display may include selection functionality (such as checkboxes, radio buttons and the like) through which the user may select from available data. In this example, the filter may remove or otherwise render un-selectable oilfield data determined to be inapplicable to the line plot data visualization type. This feature ensures that the user is not burdened with reviewing oilfield data that cannot be used for the data visualization type of their choice.

In one embodiment, oilfield data may include a plurality of oilfield data types that may be of interest to the user in relation to one or more oilfield operations. Oilfield data as described herein may include measured/observed oilfield data and/or simulated oilfield data generated by one or more computer simulation(s). In one embodiment, oilfield data may be divided into user friendly categories such as oilfield data sources, oilfield data identifiers, and oilfield data properties. Further, oilfield data may be conveniently arranged upon the selection screen(s) according to oilfield data type.

After receiving oilfield data selection(s) from the user, the system may generate one or more graphical representations of the selected oilfield data using the selected data type, e.g., a line plot in the above example. In one embodiment, a data visualization application capable of accessing, filtering and displaying oilfield data upon one or more graphic user interfaces may be utilized. The data visualization application may be a stand-alone application, such as the Petrel® system offered by Schlumberger®, or a proprietary data visualization package.

In one embodiment, the user may further refine the graphical representation(s) of selected oilfield data using a styling interface. In one embodiment, a unique styling interface may be provided for each type of data visualization in order to allow the user to adjust how selected oilfield data is displayed. For example, the user may wish to define styling items such a background color(s) and/or fill styles, splitting parameter(s), margin size(s), display theme(s), fill style(s), line color(s), bubble color(s) and/or sizing restriction(s), unit selection(s), scale(s), percentage(s), grid size(s), polygon sizing/usage, labeling parameter(s), etc.

This summary is provided to introduce a selection of concepts in a simplified form that are further described herein. This summary is not intended to identify key or essential features of the claimed subject matter, nor is it intended to be used as an aid in determining the scope of the claimed subject matter.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings; it being understood that the drawings contained herein are not necessarily drawn to scale and that the accompanying drawings provide illustrative implementations and are not meant to limit the scope of various technologies described herein; wherein:
Figure 1.1 is an example oilfield survey operation being performed by a seismic truck.
Figure 1.2 is an example oilfield drilling operation being performed by a drilling tool suspended by a rig and advanced into the subterranean formation.
Figure 1.3 is an example oilfield wireline operation being performed by a wireline tool suspended by the rig and into the wellbore of Figure 1.2.
Figure 1.4 is an example oilfield operation being performed by a production tool deployed from the rig and into a completed wellbore for drawing fluid from the downhole reservoir into a surface facility.
Figure 2.1 is an example oilfield seismic trace of the subterranean formation of Figure 1.1.
Figure 2.2 is an example oilfield core sample of the example formation shown in Figure 1.2.
Figure 2.3 is an example oilfield well log of the subterranean formation of Figure 1.3.
Figure 2.4 is an example simulation decline curve of fluid flowing through the example subterranean formation of Figure 1.4.
Figure 3 is a schematic view, partially in cross section, of an example oilfield operation having a plurality of data acquisition tools positioned at various locations along the oilfield operation for collecting data from the subterranean formation.
Figure 4 is an example schematic view of an oilfield operation having a plurality of wellsites for producing hydrocarbons from the subterranean formation.
Figure 5 is a flowchart diagram illustrating an oilfield data selection process of one example embodiment.
Figures 6-7 are example graphic user interfaces that may be used in conjunction with one or more embodiments.
Figure 8 is an example line plot oilfield data visualization.
Figure 9 is an example cross plot oilfield data visualization.
Figure 10 is an example grid plot oilfield data visualization.
Figure 11 is an example bubble plot oilfield data visualization.
Figures 12-13 are example graphic user interfaces that may be used in conjunction with one or more embodiments.
Figure 14 is an example computer system that may be utilized in conjunction with one or more embodiments.

### DETAILED DESCRIPTION

In the following description, numerous details are set forth to provide an understanding of the present invention. However, it will be understood by those skilled in the art that the inventions described herein may be practiced without these details and that numerous variations or modifications from the described embodiments may be possible.

The present disclosure describes embodiments of a method of facilitating the analysis of oilfield data, a computer readable medium for facilitating the analysis of oilfield data and an oilfield data analysis system.

By way of background, Figures 1.1-1.4 illustrate simplified, schematic views of oilfield (100) having subterranean formation (102) containing reservoir (104) therein in accordance with implementations of various technologies and techniques described herein.

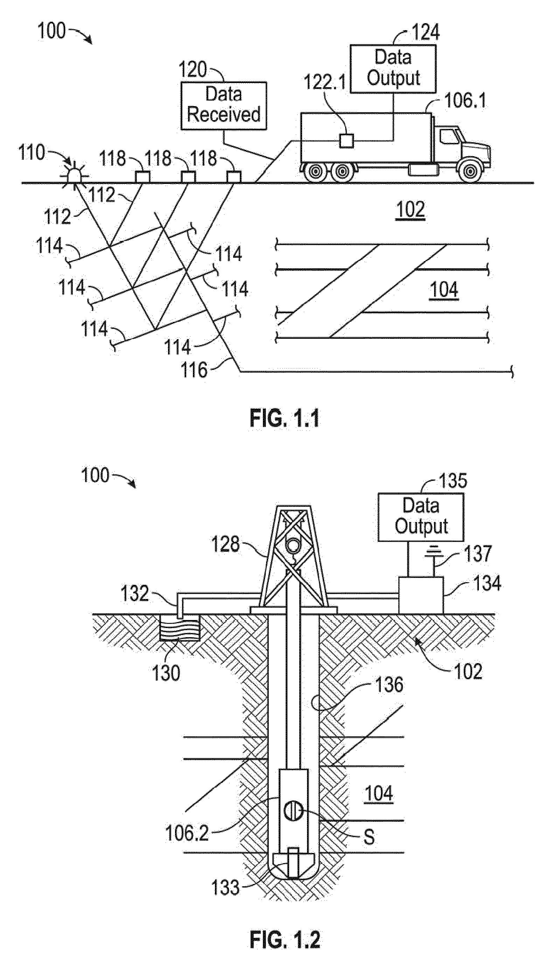

Figure 1.1 illustrates a survey operation being performed by a survey tool, such as seismic truck (106.1), to measure properties of the subterranean formation. In this example, the survey operation is a seismic survey operation for producing sound vibrations. In Figure 1.1, sound vibrations (112) generated by source (110), reflects off horizons (114) in earth formation (116). A set of sound vibrations is received by sensors, such as geophone-receivers (118), situated on the earth's surface. The data received (120) is provided as input data to a computer (122.1) of a seismic truck (106.1), and responsive to the input data, computer (122.1) generates seismic data output (124). This seismic data output may be stored, transmitted or further processed as desired, for example, by data reduction.

Figure 1.2 illustrates a drilling operation being performed by drilling tool (106.2) suspended by rig (128) and advanced into subterranean formations (102) to form wellbore (136). Mud pit (130) is used to draw drilling mud into the drilling tools via flow line (132) for circulating drilling mud down through the drilling tools, then up wellbore (136) and back to the surface. The drilling mud may be filtered and returned to the mud pit.

A circulating system may be used for storing, controlling, or filtering the drilling mud. The drilling tools are advanced into subterranean formations (102) to reach reservoir (104). Each well may target one or more reservoirs. The drilling tools may be adapted for measuring downhole properties using logging while drilling tools. The logging while drilling tools may also be adapted for taking core sample (133).

Computer facilities may be positioned at various locations about the oilfield (100) (e.g., the surface unit 134) and/or at remote locations. Surface unit (134) may be used to communicate with the drilling tools and/or offsite operations, as well as with other surface or downhole sensors. Surface unit is capable of communicating with the drilling tools to send commands to the drilling tools, and to receive data therefrom. Surface unit may also collect data generated during the drilling operation and produces data output (135), which may then be stored or transmitted.

Sensors (S), such as gauges, may be positioned about oilfield (100) to collect data relating to various oilfield operations as described previously. In this example, sensor (S) may be positioned in one or more locations in the drilling tools and/or at rig (128) to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools (106.2) may include a bottom hole assembly (BHA) (not shown) near the drill bit (e.g., within several drill collar lengths from the drill bit). The bottom hole assembly may include capabilities for measuring, processing, and storing information, as well as communicating with the surface unit. The bottom hole assembly further may further include drill collars for performing various other measurement functions.

The data gathered by sensors (S) may be collected by the surface unit and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit (134) may include transceiver (137) to allow communications between surface unit (134) and various portions of the oilfield (100) or other locations. The surface unit may also be provided with one or more controllers (not shown) for actuating mechanisms at the oilfield. The surface unit may then send command signals to the oilfield in response to data received.

The surface unit may receive commands via transceiver (137) or may itself execute commands to the controller. A processor may be provided to analyze the data (locally or remotely), make the decisions and/or actuate the controller. In this manner, the oilfield may be selectively adjusted based on the data that is collected and analyzed. This technique may be used to optimize portions of the field operation, such as controlling drilling, weight on bit, pump rates, or other parameters. These adjustments may be made automatically based on computer protocol, and/or manually by an operator. In some cases, well plans may be adjusted to select optimum operating conditions, or to avoid problems.

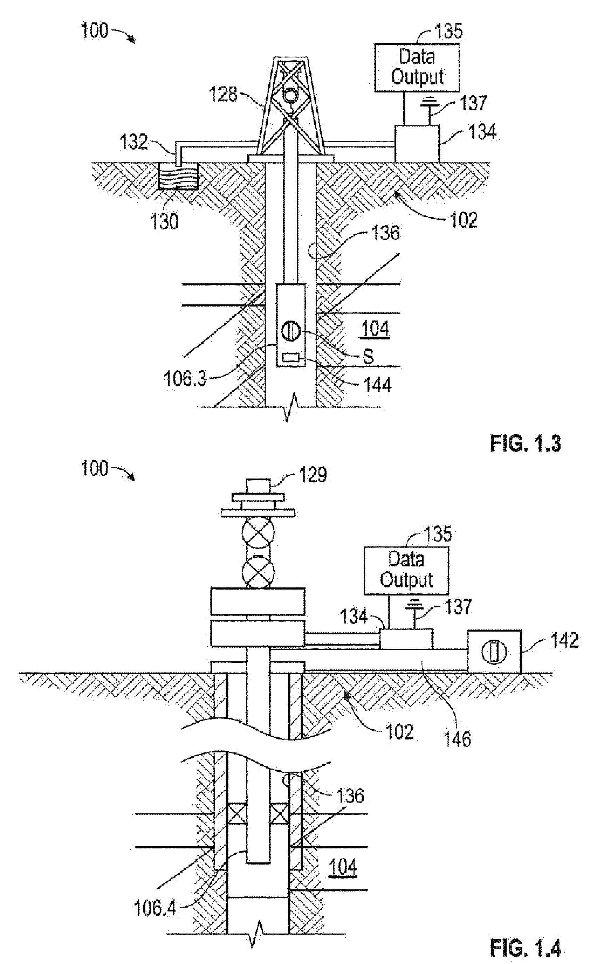

Figure 1.3 illustrates a wireline operation being performed by wireline tool (106.3) suspended by rig (128) and into wellbore (136) of Figure 1.2. The wireline tool may be adapted for deployment into the wellbore for generating well logs, performing downhole tests and/or collecting samples. The wireline tool may be used to provide another method and apparatus for performing a seismic survey operation. The wireline tool may, for example, have an explosive, radioactive, electrical, or acoustic energy source (144) that sends and/or receives electrical signals to surrounding subterranean formations (102) and fluids therein.

Wireline tool (106.3) may be operatively connected to, for example, geophones (118) and a computer (122.1) of a seismic truck (106.1) of Figure 1.1. Wireline tool (106.3) may also provide data to surface unit (134). Surface unit (134) may collect data generated during the wireline operation and may produce data output (135) that may be stored or transmitted and subsequently analyzed. Wireline tool (106.3) may be positioned at various depths in the wellbore (136) to provide information relating to the subterranean formation (102).

Sensors (S), such as gauges, may be positioned about oilfield (100) to collect data relating to various field operations as described previously. Sensors may be positioned in wireline tool (106.3) to measure downhole parameters which relate to, for example porosity, permeability, fluid composition and/or other parameters of the oilfield operation.

Figure 1.4 illustrates a production operation being performed by production tool (106.4) deployed from a production unit or Christmas tree (129) and into completed wellbore (136) for drawing fluid from the downhole reservoirs into surface facilities (142). The fluid flows from reservoir (104) through perforations in the casing (not shown) and into production tool (106.4) in wellbore (136) and to surface facilities (142) via gathering network (146).

Sensors, such as gauges, may be positioned about oilfield (100) to collect data relating to various field operations as described previously. Sensors may be positioned in production tool (106.4) or associated equipment, such as Christmas tree (129), gathering network (146), surface facility (142), and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figures 1.2-1.4 illustrate tools used to measure data relating to an oilfield, it will be appreciated that the tools may be used in connection with non-oilfield operations, such as gas fields, mines, aquifers, storage, or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

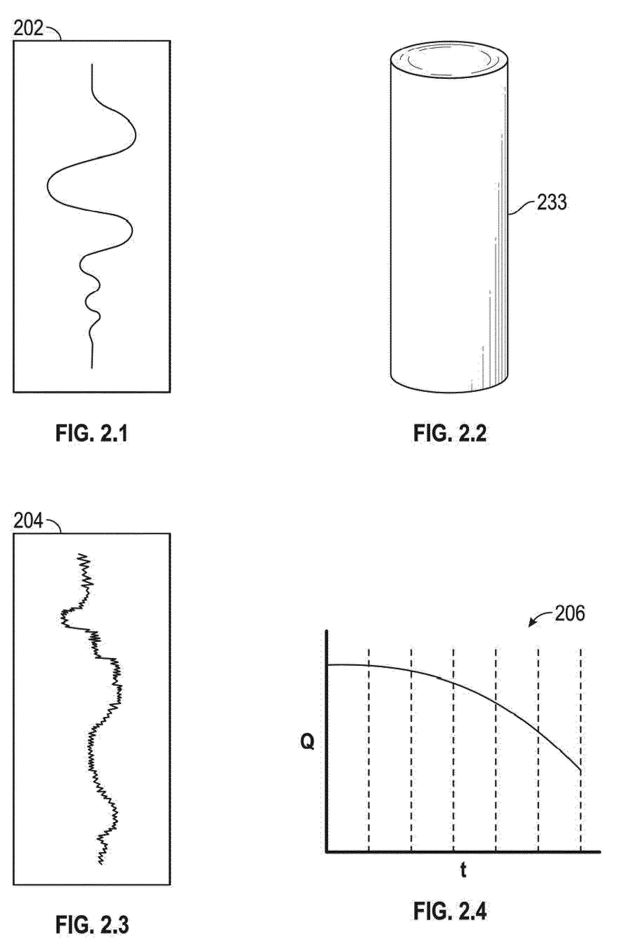

Figures 2.1-2.4 are example graphical depictions of data collected by the tools of Figures 1.1-1.4. Figure. 2.1 depicts a seismic trace (202) of the subterranean formation of Figure 1.1 taken by survey truck (106.1). The seismic trace measures a two-way response over a period of time. Figure 2.2 depicts a core sample (233) taken by the drilling tool (106.2). The core test may provide a graph of the density, resistivity, or other physical property of the core sample (233) over the length of the core. Tests for density and viscosity may be performed on the fluids in the core at varying pressures and temperatures. Figure 2.3 depicts a well log (204) of the subterranean formation of Figure 1.3 taken by the wireline tool (106.3). The wireline log typically provides a resistivity measurement of the formation at various depths. Figure 2.4 depicts a production decline curve (206) of fluid flowing through the subterranean formation of Figure 1.4 taken by the production tool (106.4). The production decline curve (206) may provide the production rate Q as a function of time t.

The respective graphs of Figures 2.1-2.3 contain static measurements that describe the physical characteristics of the formation. These measurements may be compared to determine the accuracy of the measurements and/or for checking for errors. In this manner, the plots of each of the respective measurements may be aligned and scaled for comparison and verification of the properties.

Figure 2.4 provides a dynamic measurement of the fluid properties through the wellbore. As the fluid flows through the wellbore, measurements are taken of fluid properties, such as flow rates, pressures, composition, etc. As described below, the static and dynamic measurements may be used to generate models of the subterranean formation to determine characteristics thereof.

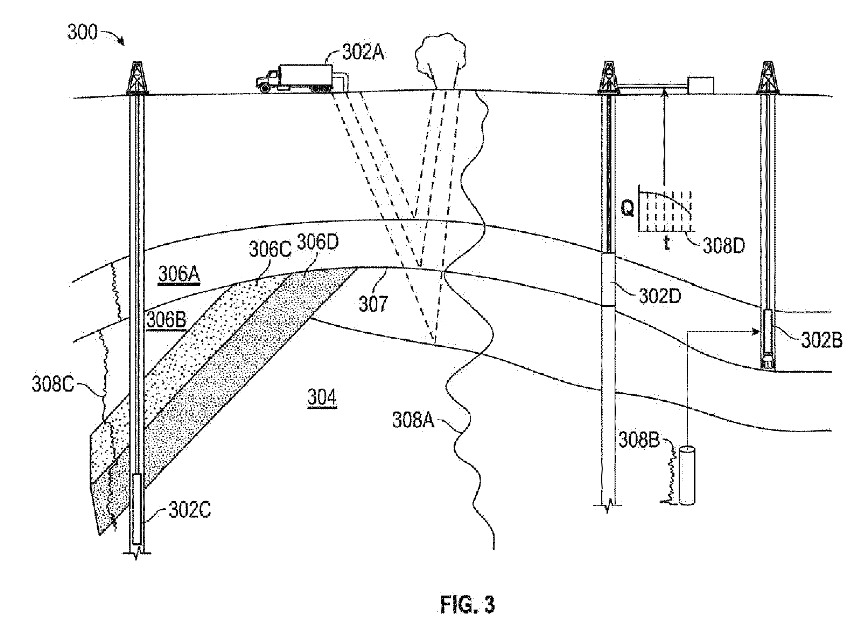

Figure 3 is a schematic view, partially in cross section of an oilfield (300) having data acquisition tools (302A), (302B), (302C), and (302D) positioned at various locations along the oilfield for collecting data of a subterranean formation (304). The data acquisition tools (302A-302D) may be the same as data acquisition tools of Figure 1, respectively. In this example, the data acquisition tools (302A-302D) may generate data plots or measurements (308A-308D), respectively.

Data plots (308A-308D) are examples of static data plots that may be generated by the data acquisition tools (302A-302D), respectively. Static data plot (308A) is a seismic two-way response time and may be the same as the seismic trace (202) of Figure 2.1. Static plot (308B) is core sample data measured from a core sample of the formation (304), similar to the core sample (233) of Figure 2.2. Static data plot (308C) is a logging trace, similar to the well log (204) of Figure 2.3. Data plot (308D) is a dynamic data plot of the fluid flow rate over time, similar to the graph (206) of Figure 2.4. Other data may also be collected, such as historical data, user inputs, economic information, other measurement data, and other parameters of interest.

The subterranean formation (304) has a plurality of geological structures (306A-306D). In this example, the formation has a sandstone layer (306A), a limestone layer (306B), a shale layer (306C), and a sand layer (306D). A fault line (307) extends through the formation. The static data acquisition tools may be adapted to measure the formation and detect the characteristics of the geological structures of the formation.

While a specific subterranean formation (304) with specific geological structures are depicted, it will be appreciated that the formation may contain a variety of geological structures. Fluid may also be present in various portions of the formation. Each of the measurement devices may be used to measure properties of the formation and/or its underlying structures in order to generate oilfield data. While each acquisition tool is shown as being in specific locations along the formation, it will be appreciated that one or more types of measurement may be taken at one or more location across one or more oilfields or other locations for comparison and/or analysis.

The data collected from various sources, such as the data acquisition tools of Figure 3, may then be evaluated using one or more data visualization applications. Seismic data displayed in the static data plot (308A) from the data acquisition tool

(302A) may be used by a geophysicist to determine characteristics of the subterranean formation (304). Core data shown in static plot (308B) and/or log data from the well log (308C) may be used by a geologist to determine various characteristics of the geological structures of the subterranean formation (304). Production data from the production graph (308D) may be used by the reservoir engineer to determine fluid flow reservoir characteristics.

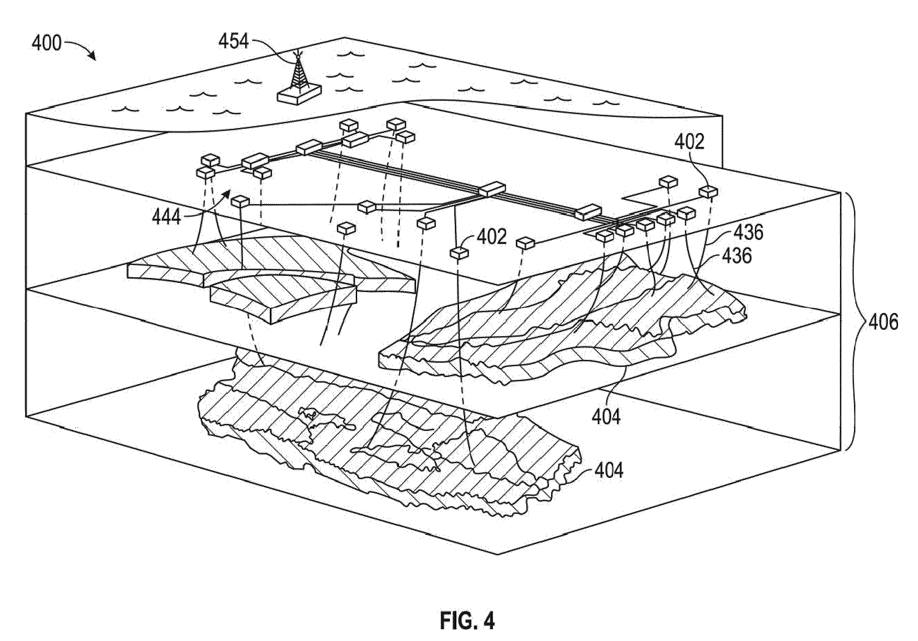

Figure 4 illustrates an example oilfield (400) for performing oilfield operations. In this example, the oilfield has a plurality of wellsites (402) operatively connected to a central processing facility (454). Part or all of the oilfield may be on land and/or sea. Also, while a single oilfield with a single processing facility and a plurality of wellsites is depicted, any combination of one or more oilfields, one or more processing facilities and one or more wellsites may be present.

Each wellsite (402) may have equipment that forms a wellbore (436) into the earth. The wellbores extend through subterranean formations (406) including reservoirs (404). These reservoirs (404) contain fluids, such as hydrocarbons. The wellsites draw fluid from the reservoirs and pass them to the processing facilities via surface networks (444). The surface networks (444) may have tubing and control mechanisms for controlling the flow of fluids from the wellsite to the processing facility (454).

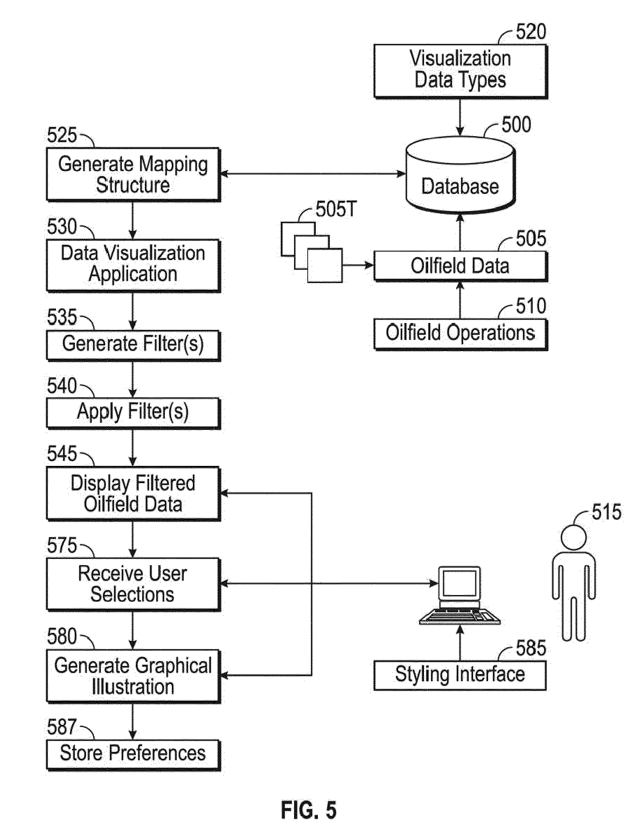

Referring to Figure 5, the present disclosure describes a system, method, and computer readable medium for facilitating the analysis of oilfield data. Specifically, the present disclosure describes an efficient and user friendly process through which the user may select oilfield data for analysis using a filtered data presentation arrangement, review graphical representations of the selected data and fine-tune the display using any number of styling options.

In one embodiment, one or more computer databases (500) may be utilized for storing oilfield data (505) relating to one or more oilfield operations (510). A plurality of data visualization types (520) may be identified and stored to the database (500). In one embodiment, data visualization types may include charts, maps, graphs and/or any other suitable audio/visual representations that may be utilized to display oilfield data for analysis. In one embodiment, data visualization types may include, but are not limited to, line plots (such as line charts and/or graphs), cross plots, grid plots (such as grid maps and/or contour maps), and/or bubble plots, (such as bubble maps and/or bubble charts).

In one embodiment, oilfield data may include a plurality of oilfield data types (505T) that may be of interest to the user (515) in relation to one or more oilfield operations. Oilfield data as described herein may include measured/observed oilfield data and/or simulated oilfield data generated by one or more computer simulation(s).

In one embodiment, oilfield data that may be displayed for each type of data visualization may be identified and stored to the database. This may be accomplished by generating one or more mapping structures to map (or match) each type and/or subtype of oilfield data to each data visualization type, as illustrated by Box (525). The data visualization mapping structure(s) may be saved to the database and linked to at least one data visualization application (530) capable of accessing and displaying oilfield data upon one or more graphic user interfaces coupled to the database (500).

In one embodiment, one or more oilfield data filters may be generated and applied to each data visualization type, as illustrated by Boxes (535 and 540). For example, the system may identify oilfield data that may be utilized in conjunction with a line plot and generate a filter for use with a line plot. The process may be repeated for each type of data visualization, i.e., a filter for a line plot, another filter for use with a cross plot, another filter for use with a grid plot, another filter for use with a bubble plot, etc. The mapping structure(s) described above may be utilized in order to generate one or more of the oilfield data filters.

In one embodiment, a filter may be applied to each type of oilfield data and the resulting filtered data may be displayed to the user, as illustrated by Box (545) of Figure 5. Each filter may utilize a Boolean expression such that the value of the Boolean expression associated with the type of oilfield data indicates whether at least a portion of the oilfield data type will be subjected to the filter. In one embodiment, the value of the Boolean expression may be dependent upon the type of data visualization selected by the user (or selected by default by the system).

Boolean expression values/attributes may be true/false, zero/one, yes/no, or any other suitable convention capable of indicating whether a type of oilfield data will be subjected to the filter. Boolean expression values may be associated with, and/or stored with, each type of oilfield data or as part of an oilfield analysis project so that the filter "travels with" the project if it is transferred and/or stored upon another database or computer-readable storage medium.

In one embodiment, upon receiving a data visualization type selection from the user, e.g., a line plot, the system may search the database for the stored oilfield data filter corresponding to the line plot data visualization type and then apply the retrieved filter to the displayed oilfield data. In this example, the oilfield data that cannot be used to populate a line plot data visualization is omitted or otherwise rendered un-selectable by the user by the filter.

The filtering feature saves the user valuable time in that he or she does not have to scroll through screen after screen of oilfield data that cannot be used in conjunction with the data visualization type in question, e.g., a line plot in this example. A graphic user interface (not shown) may be provided through which the user may select the type of data visualization he or she would like to use.

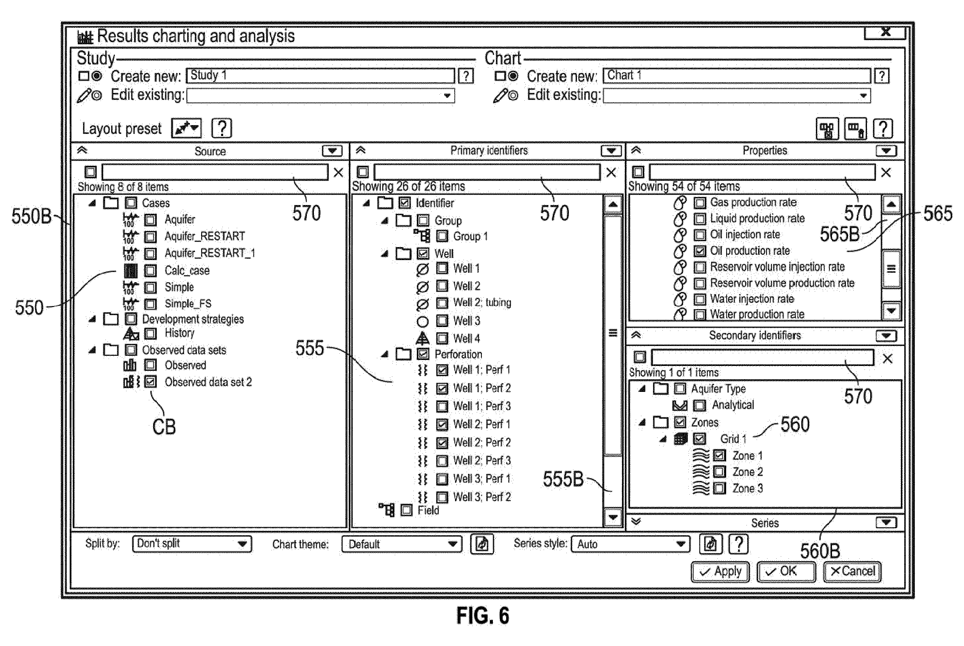

Figure 6 illustrates an example graphic user interface where the user has selected a line plot data visualization type and where oilfield data determined to be inapplicable to the line plot data visualization type has been filtered out of the display. Figure 6 illustrates an example embodiment where oilfield data that is determined to be inapplicable to the line plot data visualization type has been removed entirely such that only oilfield data that the user can utilize in conjunction with a line plot type of data visualization is displayed for the user to select from.

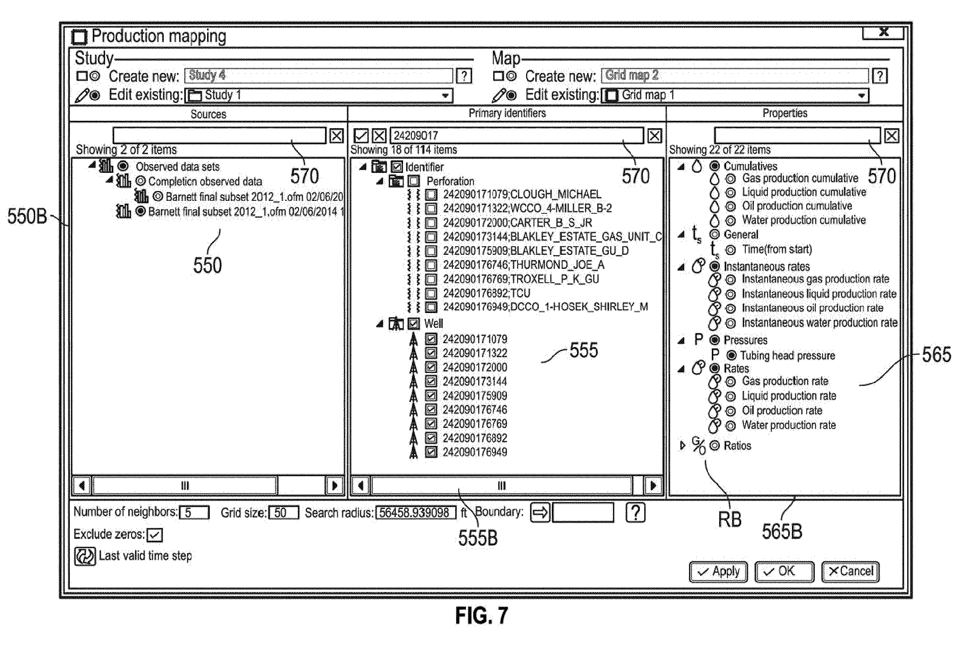

Figure 7 illustrates an example graphic user interface where the user has selected a grid plot data visualization type and where oilfield data determined to be inapplicable to the grid plot data visualization type has been filtered out of the display. Figure 7 illustrates an example embodiment where oilfield data that is inapplicable to a grid plot data visualization type has been subjected to a filter and grayed-out and/or presented in an italicized format such that the inapplicable data is displayed upon the graphic user interface but may not be selected by the user. In one embodiment, the system may provide an option whereby the user may select the manner in which data is filtered out, i.e., whether it is removed entirely or presented in a grayed out and/or italicized format.

In one embodiment, oilfield data types may be divided into user friendly categories such as oilfield data sources, oilfield data identifiers, and oilfield data properties. Further, oilfield data identifiers may be further subdivided into primary and secondary identifiers. In one embodiment, oilfield data sources may be directed to measured/observed oilfield data and/or simulated oilfield data pertaining to one or more oilfield operations, such as the example shown in Figure 4.

In one embodiment, oilfield data identifiers may be directed to specific wells, groups of wells, and/or perforations within individual wells for the selected oilfield project. In one embodiment, oilfield data properties may be directed to specific properties of the selected oilfield project that the user wishes to analyze, such as oil production rate, gas production rate, water production rate, etc.

As noted above, oilfield data identifiers may be subdivided into primary and secondary identifiers. This feature allows the user to select multiple identifiers in situations where one identifier may not be sufficient to identify the property in question. For example, in a situation where multiple aquifers are present in the subterranean formation of an oilfield operation, a primary identifier may be utilized to identify an "aquifer" and a secondary identifier may be utilized to identify the type of aquifer in question so that the resulting data visualization displays oilfield data concerning the desired aquifer type. In this example, the secondary identifier clarifies the identifier, i.e., the type of aquifer in this example.

Another example is a situation where a subterranean formation contains multiple wells and is divided into zones 1, 2 and 3. In this example, a user who wishes to see the oil production rate of oil coming from zone 1 of the formation may enter "oil production rate" as the primary identifier and "zone 1" as the secondary identifier. Without the secondary identifier in this example, the user would be limited to visualizations of oil production from individual wells.

Figures 6 and 7 illustrate example embodiments where oilfield data may be conveniently arranged upon the screen according to oilfield data type. Specifically, in this example, oilfield data types may include oilfield data sources (550), oilfield data identifiers (primary (555) and secondary (560)) and oilfield data properties (565). In one embodiment, each oilfield data type may be displayed in its own box (550B, 555B, 560B and 565B, respectively) to further assist the user in selecting oilfield data to be displayed.

In one embodiment, one or more oilfield data type display boxes may be equipped with a search bar (570) to allow the user to conduct key word searching for each type of oilfield data. In one embodiment, one or more of the search bars may include an auto-complete feature capable of predicting a word or phrase that the user wants to type in without the user actually typing it in completely.

In one embodiment, checkboxes may be provided upon the graphic user interface in order to allow the user to select multiple oilfield data types. Figures 6 and 7 illustrate example embodiments where check boxes and/or radio buttons are provided to increase user efficiency in selecting oilfield data for subsequent display. In this example, the system provides checkmark boxes (CB) for oilfield data elements where the user may select multiple items and radio buttons (RB) for oilfield elements where only one of a group of items may be selected.

In one embodiment, user selections may be received and stored by the system and used to generate one or more graphical representation(s) using the selected parameters, as illustrated by Boxes (575 and 580) of Figure 5. In one embodiment, a data visualization application capable of accessing, filtering and displaying oilfield data upon one or more graphic user interfaces may be utilized. The data visualization application may be a stand-alone application, such as the Petrelt system offered by Schlumberger®, or a proprietary data visualization package.

In one embodiment, the selected oilfield data may be displayed to the user using a two, three, or four dimensional arrangement, depending upon the selected data visualization type. In one embodiment, a two dimensional arrangement may include x and y axis components, a three dimensional arrangement may include x, y, and z components, and a four dimensional arrangement may include x, y, z components along with a time component. Seismic data may be represented utilizing any number of conventions. For example, various color schemes may be utilized to convey the characteristics of the displayed seismic data.

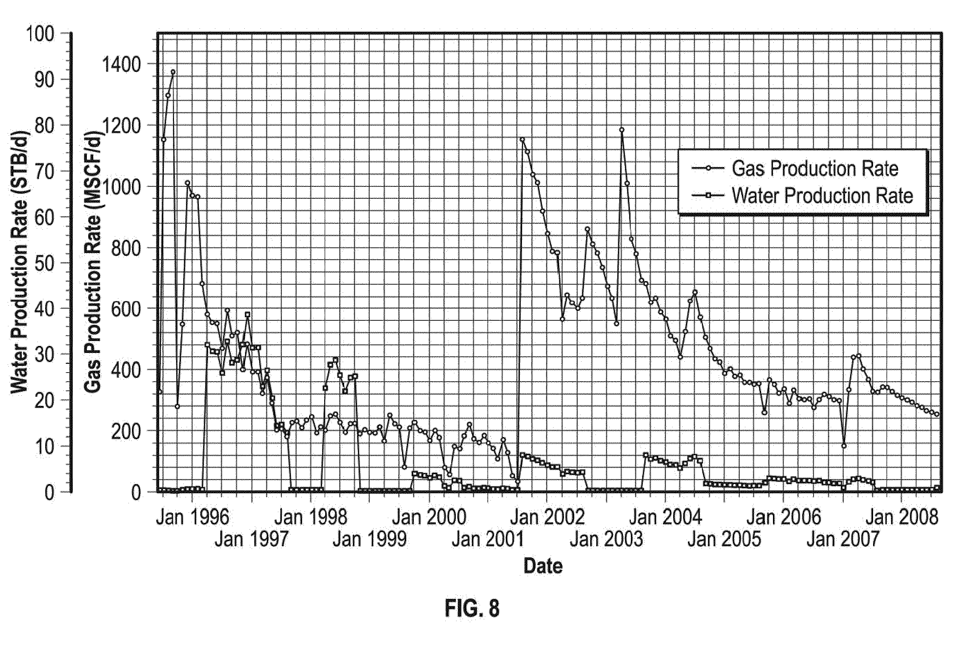

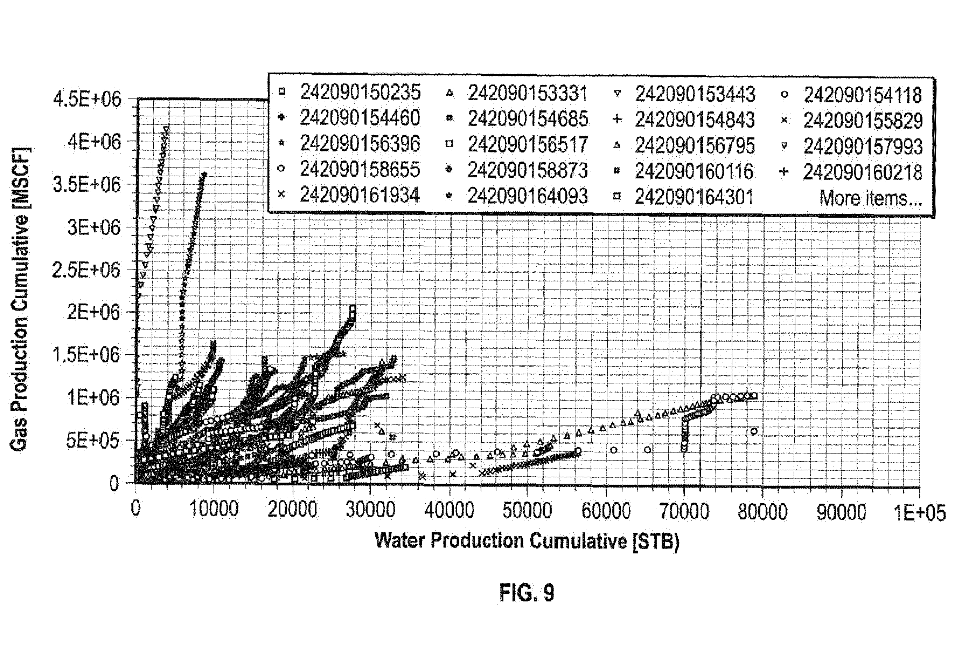

Figure 8 provides an example two dimensional line plot display of selected oilfield data (gas production rate and water production rate in this example) concerning an oilfield operation of interest. Figure 9 provides an example two dimensional cross plot display of selected oilfield data (cumulative gas production and cumulative water production in this example) concerning an oilfield operation of interest.

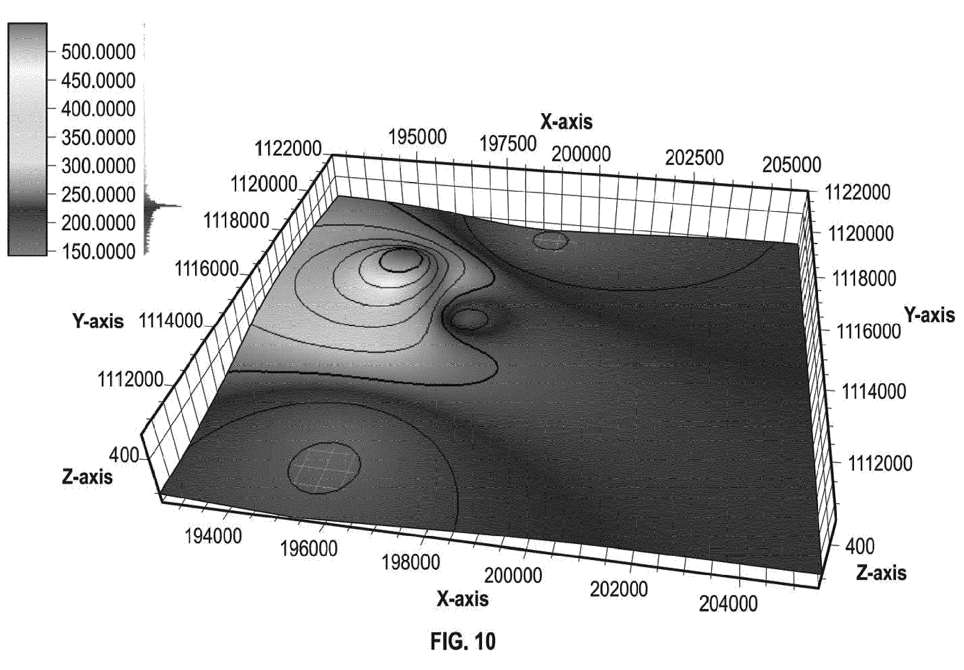

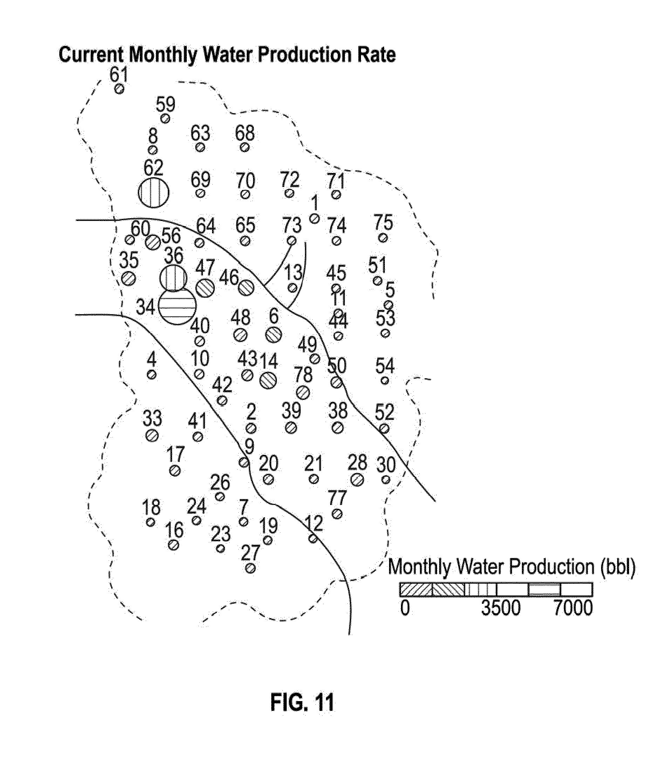

Figure 10 provides an example three dimensional grid plot display of selected oilfield data (pressure in this example) concerning an oilfield operation of interest. Figure 11 provides an example two dimensional bubble plot display of selected oilfield data (current monthly water production rate in this example) concerning an oilfield operation of interest.

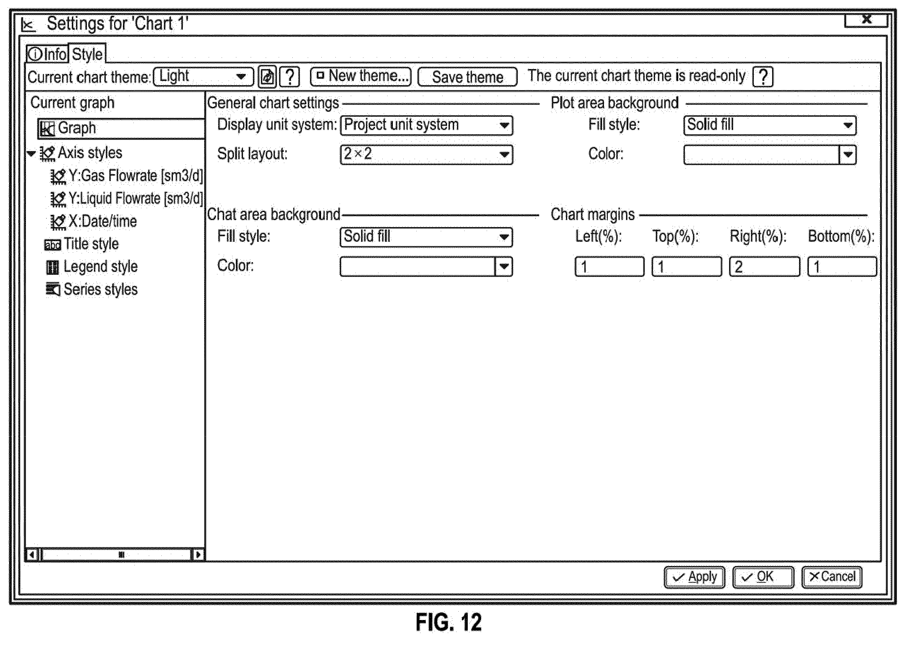

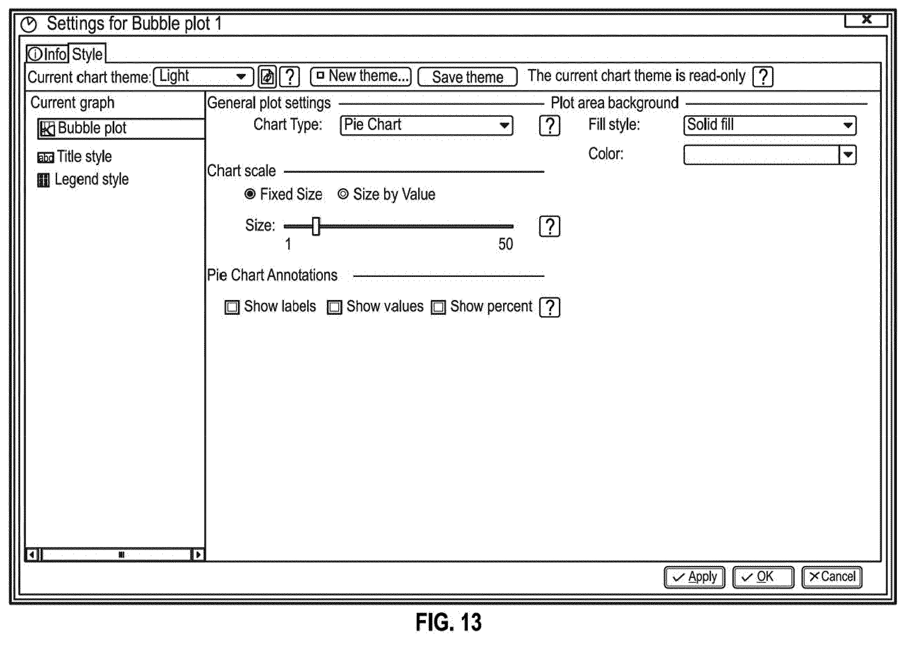

In one embodiment, the user may further refine the graphical representation(s) of selected oilfield data using a styling interface, as illustrated by Box (585) of Figure 5. In one embodiment, a unique styling interface may be provided for each type of data visualization in order to allow the user to adjust how selected oilfield data is displayed. For example, the user may wish to define styling items such a background color(s) and/or fill styles, splitting parameter(s), margin size(s), display theme(s), fill style(s), line color(s), bubble color(s) and/or sizing restriction(s), unit selection(s), scale(s), percentage(s), grid size(s), polygon sizing/usage, labeling parameter(s), etc. In one embodiment, one or more styling interfaces may be displayed to the user after he or she has selected the oilfield data to be displayed. Figure 12 illustrates an example styling interface for a line plot data visualization type and Figure 13 illustrates an example styling interface for a bubble plot data visualization type.

In one embodiment, user selections and/or styling preferences may be stored for later projects, as illustrated by Box (587) of Figure 5. For example, if a user has selected oilfield data and styling preferences for a particular data visualization type, the system may store preference information for the user and/or project in question and apply it to later sessions. In one embodiment, stored selection and/or styling data may be stored and applied to subsequent sessions according to data visualization type, such that the user's next encounter with a particular data visualization type, e.g., line plot, cross plot, etc., may automatically be populated with the user's preferences.

The system may provide customization options whereby the user may amend default mapping structure(s) by entering and/or importing custom display preferences and/or customized data visualization types to be used in conjunction with oilfield data. In one embodiment, this may be accomplished using one or more customization screens (not shown). This feature may also be used to allow the user to enter custom oilfield data types so that highly trained users may tailor the system to their specifications using custom oilfield data types and/or custom data visualization types.

The system, method and computer readable medium described herein may be utilized in conjunction with any suitable visualization package and the inventions described herein are not limited to use with the example data types or example data visualization packages. Further, the inventions described herein may be used at any phase of an oilfield operation including, but not limited to, during the interpretation of seismic data, during modeling of formational characteristics or reservoir properties (including surface modeling), and/or during operational monitoring and analysis activities.

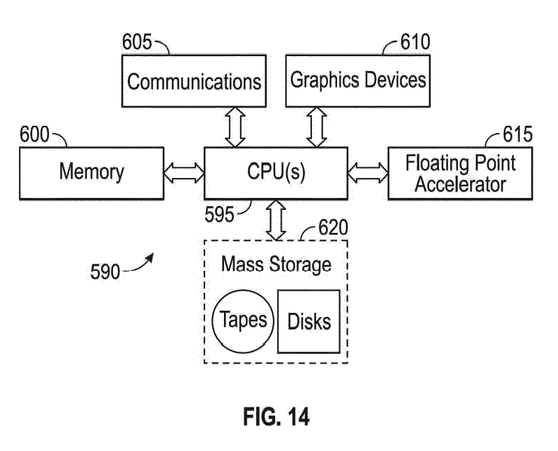

The methods described herein may be implemented on any suitable computer system capable of processing electronic data. Figure 14 illustrates one possible configuration of a computer system (590) that may be utilized. Computer system(s), such as the example system of Figure 14, may run programs containing instructions, that, when executed, perform methods according to the principles described herein. Furthermore, the methods described herein may be fully automated and able to operate continuously, as desired.

The computer system may utilize one or more central processing units (595), memory (600), communications or I/O modules (605), graphics devices (610), a floating point accelerator (615), and mass storage devices such as tapes and discs (620). Storage device (620) may include a floppy drive, hard drive, CD-ROM, optical drive, or any other form of storage device. In addition, the storage devices may be capable of receiving a floppy disk, CD-ROM, DVD-ROM, disk, flash drive or any other form of computer-readable medium that may contain computer-executable instructions.

Further, communication device (605) may be a modem, network card, or any other device to enable communication to receive and/or transmit data. It should be understood that the computer system (590) may include a plurality of interconnected (whether by intranet or Internet) computer systems, including without limitation, personal computers, mainframes, PDAs, cell phones and the like.

It should be understood that the various technologies described herein may be implemented in connection with hardware, software or a combination of both. Thus, various technologies, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various technologies.

In the case of program code execution on programmable computers, the computing device may include a processor, a storage medium readable by the processor (including volatile and non-volatile memory and/or storage elements), at least one input device, and at least one output device. One or more programs that may implement or utilize the various technologies described herein may use an application programming interface (API), reusable controls, and the like.

Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

The computer system (590) may include hardware capable of executing machine readable instructions, as well as the software for executing acts that produce a desired result. In addition, computer system (590) may include hybrids of hardware and software, as well as computer sub-systems.

Hardware may include at least processor-capable platforms, such as client-machines (also known as personal computers or servers), and hand-held processing devices (such as smart phones, personal digital assistants (PDAs), or personal computing devices (PCDs), for example). Further, hardware may include any physical device that is capable of storing machine-readable instructions, such as memory or other data storage devices. Other forms of hardware include hardware sub-systems, including transfer devices such as modems, modem cards, ports, and port cards, for example.

Software includes any machine code stored in any memory medium, such as RAM or ROM, and machine code stored on other devices (such as floppy disks, flash memory, or a CD ROM, for example). Software may include source or object code, for example. In addition, software encompasses any set of instructions capable of being executed in a client machine or server.

A database may be any standard or proprietary database software, such as Oracle, Microsoft Access, SyBase, or DBase II, for example. The database may have fields, records, data, and other database elements that may be associated through database specific software. Additionally, data may be mapped. Mapping is the process of associating one data entry with another data entry. For example, the data contained in the location of a character file can be mapped to a field in a second table. The physical location of the database is not limiting, and the database may be distributed. For example, the database may exist remotely from the server, and run on a separate platform.

Further, the computer system may operate in a networked environment using logical connections to one or more remote computers. The logical connections may be any connection that is commonplace in offices, enterprise-wide computer networks, intranets, and the Internet, such as local area network (LAN) and a wide area network (WAN). The remote computers may each include one or more application programs.

When using a LAN networking environment, the computer system may be connected to the local network through a network interface or adapter. When used in a WAN networking environment, the computer system may include a modem, wireless router or other means for establishing communication over a wide area network, such as the Internet.

The modem, which may be internal or external, may be connected to the system bus via the serial port interface. In a networked environment, program modules depicted relative to the computer system, or portions thereof, may be stored in a remote memory storage device.

Although the invention has been described with reference to specific embodiments, this description is not meant to be construed in a limited sense. Various modifications of the disclosed embodiments, as well as alternative embodiments of the invention, will become apparent to persons skilled in the art upon reference to the description of the invention. It is, therefore, contemplated that the appended claims will cover such modifications that fall within the scope of the invention.

## Claims

1. A method of facilitating the analysis of oilfield data (505, Fig. 5) **characterized by** the process steps of storing oilfield data (505, Fig. 5) pertaining to one or more oilfield operations (510, Fig. 5) to a computer database (500, Fig. 5); filtering the stored oilfield data according to a plurality of data visualization types (520, Fig. 5); and displaying at least a portion of the filtered oilfield data upon a graphic user interface coupled to the computer database (500, Fig. 5).

2. The method according to claim 1, further comprising receiving a user selection identifying at least a portion of the filtered oilfield data and a desired data visualization type; and generating a graphic illustration of the identified oilfield data using the desired data visualization type.

3. The method according to claim 2, wherein the graphic illustration is displayed upon the graphic user interface using a 2D, 3D, or 4D arrangement.

4. The method according to claim 2, further comprising a styling interface (585, Fig. 5) through which the user (515, Fig. 5) may adjust display settings for the identified oilfield data.

5. The method according to claim 1, wherein the data visualization type (520, Fig. 5) further comprises a line plot, a cross plot, a grid plot, and a bubble plot.

6. The method according to claim 1, further comprising storing preference data (587, Fig. 5) according to user or project.

7. The method according to claim 2, wherein the oilfield data (505, Fig. 5) further comprises a plurality of oilfield data types (505T, Fig. 5).

8. The method according to claim 7, wherein the oilfield data types (505T, Fig. 5) further comprise source data (550, Figs. 6-7), identifier data (555, Figs. 6-7) and properties data (565, Figs. 6-7).

9. The method according to claim 8, wherein the identified oilfield data is arranged upon the graphic user interface according to oilfield data type (505T, Fig. 5).
